# EUROPÄISCHE PATENTANMELDUNG

(11) **EP 1 220 138 A2**
(43) Veröffentlichungstag der Anmeldung: **03.07.2002**
(21) Anmeldenummer: 01710056.1
(22) Anmeldetag: 21.11.2001
(51) Int. Cl.: G06K 7/00

(54) **Chipkartenlesevorrichtung, insbesondere nach dem PCMCIA-Standard**

(30) Priorität: 02.01.2001 DE 20100037 U
(71) Anmelder: STOCKO Contact GmbH & Co. KG, 42327 Wuppertal (DE)
(72) Erfinder: Klatt, Dieter, 42489 Wülfrath (DE)
(74) Vertreter: Stenger, Watzke & Ring Patentanwälte

(57) **Zusammenfassung**

Um eine Chipkartenlesevorrichtung bereitzustellen, in die sich eine Chipkarte bequem einführen läßt und die vergleichsweise einfach aus dem Steckplatz eines elektronischen Geräts entnommen werden kann, wird in Übereinstimmung mit dem Anspruch 1 bei einer Chipkartenlesevorrichtung mit den eingangs genannten Merkmalen vorgeschlagen, daß die untere Abdeckplatte im Bereich des Einschubschlitzes mit einem ausziehbaren Schiebeelement versehen ist, durch daß die untere Abdeckplatte in Richtung auf eine einzuführende Chipkarte wenigstens bereichsweise über die obere Abdeckplatte hervorstehend verlängerbar ist.

## Beschreibung

Die Erfindung betrifft eine Chipkartenlesevorrichtung, insbesondere nach dem PCMCIA-Standard, mit einem Gehäuse, das eine obere Abdeckplatte und eine untere Abdeckplatte aufweist sowie an einer Stirnseite mit einem in einen Einschubkanal für die Aufnahme wenigstens einer Chipkarte mündenden Einschubschlitz versehen ist, wobei an der dem Einschubschlitz gegenüberliegenden Stirnseite des Gehäuses eine Steckanschlußleiste vorgesehen ist, die mit einer sich annährend parallel zum Einschubkanal im Gehäuse erstreckenden Leiterplatte elektrisch verbunden ist, und wobei die Leiterplatte mit wenigstens einem Kontaktelement zum Kontaktieren entsprechender Kontaktfelder einer in den Einschubkanal eingeführten Chipkarte versehen ist.

Unter einer Chipkarte im Sinne der vorliegenden Erfindung werden mit elektronischen Bauteilen, insbesondere Mikroprozessoren, bestückte, kartenförmige Trägerelemente verstanden, auf denen die unterschiedlichsten Informationen abrufbar gespeichert werden können. Derartige, in ihren Abmessungen meist nach ISO 78 16 normierte Chipkarten sind vor allem im Computer- und Mobilfunkbereich anzutreffen. Sie eignen sich im besonderen Maße als Identitätskarte, um die Identifikation und Authentifikation von Personen sicherzustellen, wie etwa eine sogenannte SIM-Karte ("Subscriber Identification Modul"), mittels der sich ein Teilnehmer in einem Mobilfunknetz identifizieren läßt. Häufig Anwendung finden Chipkarten deshalb überall dort, wo ein gesicherter Zugang erforderlich ist, wie zum Beispiel im Zusammenhang mit Homebanking, Pay-TV, E-Commerce oder dergleichen.

Zum Lesen einer Chipkarte sind Chipkartenlesevorrichtungen bekannt, die in Art eines Adapters ermöglichen, eine Chipkarte an einen nach dem PCMCIA-Standard genormten Steckplatz eines elektronischen Geräts, beispielsweise eines Notebooks oder eines digitalen Receivers, anzuschließen. Die im Stand der Technik, etwa nach den Patentschriften EP 0 552 078 B1 oder EP 0 735 507 B1, bekannten Chipkartenlesevorrichtungen weisen eine Steckanschlußleiste auf, die mit dem Steckplatz des elektronischen Geräts eine mechanische und elektrische Kontaktierung eingeht. Das Auslesen der Chipkarte erfolgt durch in einem Einschubkanal dieser sogenannten PC-Cards angeordnete Kontaktelemente, welche die Chipkarte berührend oder, beispielsweise auf optischem oder magnetischem Weg, berührungslos kontaktieren.

Als Nachteil hat sich bei den bekannten Chipkartenlesevorrichtungen eine oftmals unbefriedigende Handhabung herausgestellt. Ursächlich hierfür ist in erster Linie, daß die einen nach dem PCMCIA-Standard genormten Steckplatz aufweisenden elektronischen Geräte aufgrund der Vorgabe einer in wirtschaftlicher Hinsicht kostengünstigen Fertigung ohne einen eine unkomplizierte Entnahme der Chipkartenlesevorrichtungen ermöglichenden Auswurfmechanismus konzipiert werden. Für digitale Receiver, wie etwa die sogenannte Set-Top-Box, ist es zwar bekannt, Chipkartenlesevorrichtungen einzusetzen, die in ihren Abmessungen größer, genauer gesagt länger, sind als die nach dem PCMCIA-Standard genormte PC-Cards. Solche, etwa nach EN 50 221 genormte Chipkartenlesevorrichtungen verfügen danach über einen erweiterten Bereich, der eine zureichende Handhabung beim Einführen und Entnehmen der Chipkartenlesevorrichtungen gewährleistet. Eine von dem PCMCIA-Standard abweichende Dimensionierung der Chipkartenlesevorrichtungen ist aber für die überwiegende Anzahl an Anwendungen nicht erwünscht.

Nachteilig bei den bekannten Chipkartenlesevorrichtungen ist darüber hinaus, daß eine Chipkarte exakt zu positionieren ist, um in den Einschubkanal eingeführt werden zu können. Dies ist besonders dann mißlich, wenn, wie häufig bei Notebooks vorzufinden, der Steckplatz für die Chipkartenlesevorrichtung seitlich oder auf der Rückseite des elektronischen Gerätes angeordnet ist und sich damit außerhalb des Sichtfelds eines Benutzers befindet.

Der Erfindung liegt die **Aufgabe** zugrunde, eine Chipkartenlesevorrichtung bereitzustellen, in die sich eine Chipkarte bequem einführen läßt und die vergleichsweise einfach aus dem Steckplatz eines elektronischen Geräts entnommen werden kann.

Zur **Lösung** dieser Aufgabe wird in Übereinstimmung mit dem Anspruch 1 bei einer Chipkartenlesevorrichtung mit den eingangs genannten Merkmalen vorgeschlagen, daß die untere Abdeckplatte im Bereich des Einschubschlitzes mit einem ausziehbaren Schiebeelement versehen ist, durch das die untere Abdeckplatte in Richtung auf eine einzuführende Chipkarte wenigstens bereichsweise über die obere Abdeckplatte hervorstehend verlängerbar ist.

Eine solchermaßen ausgestaltete Chipkartenlesevorrichtung macht sich die Erkenntnis zu eigen, daß sich eine Chipkarte dann bequem in den Einschubkanal einführen läßt, wenn die untere Abdeckplatte derart verlängert ist, daß sie gegenüber der oberen Abdeckplatte hervorsteht. Denn auf diese Weise bildet die untere Abdeckplatte einen Auflagebereich für die einzuführende Chipkarte, der ein schräges Einführen einer Chipkarte in den Einschubschlitz gestattet und welcher der Chipkarte beim weiteren Einschieben in den Einschubkanal eine gezielte Führung gibt. Ein sicheres Einführen einer Chipkarte ist somit auch in eine außerhalb des Sichtfelds eines Benutzers angeordnete Chipkartenlesevorrichtung möglich. Indem die untere Abdeckplatte durch das in Richtung auf eine einzuführende Chipkarte ausziehbare Schiebeelement verlängerbar ist, läßt sich die erfindungsgemäße Chipkartenlesevorrichtung zudem ohne weiteres so ausbilden, daß sie bei in seiner eingefahrenen Stellung befindlichem Schiebeelement die nach dem PCMCIA-Standard vorgeschriebenen Abmessungen aufweist. Weiterhin trägt das Schiebeelement in seiner ausgefahrenen Stellung dazu bei, daß die erfindungsgemäße Chipkartenlesevorrichtung einfach zu greifen ist und damit mühelos aus dem Steckplatz eines elektronischen Geräts entnommen werden kann. Zum Erzielen der vorgenannten Vorteile ist es ausreichend, wenn das Schiebeelement die untere Abdeckplatte nicht in ihrer gesamten Breite sondern nur bereichsweise verlängert. Das Schiebeelement kann demnach zum Beispiel gabel- oder zungenförmig ausgebildet sein.

Vorteilhafte Weiterbildungen einer solchen Chipkartenlesevorrichtung stellen die Gegenstände der Unteransprüche dar. So ist es etwa in Hinsicht auf eine zuverlässige Wirkungsweise des Schiebeelements besonders vorteilhaft, das Schiebeelement in einer Ausnehmung der unteren Abdeckplatte zu führen. Dies bietet zugleich den Vorteil, daß die Abmessungen und die äußere Form der erfindungsgemäßen Chipkartenlesevorrichtung durch das Schiebeelement in dessen eingefahrener Stellung nicht beeinträchtigt werden. Von Vorteil ist ferner, einen Auswurfmechanismus vorzusehen, durch den das Schiebeelement selbsttätig von einer ersten Stellung, vorzugsweise der vollständig eingefahrenen Stellung, in eine zweite Stellung, vorzugsweise die vollständig ausgefahrene Stellung, bewegbar ist. Ein solcher Auswurfmechanismus kann beispielsweise in Art einer Druckmechanik ausgebildet sein, so daß durch Ausüben einer axialen Kraft, etwa durch einen Fingerdruck, auf das in der eingefahrenen Stellung befindliche Schiebeelement eine bislang arretierte Feder freigegeben wird, die das Schiebeelement aufgrund ihrer Federwirkung ausfährt, und durch Drücken auf das in der ausgefahrenen Stellung befindliche Schiebeelement dieses sich entgegen der Federwirkung in seine eingefahrene Stellung schieben läßt, wo die Feder erneut arretiert wird.

Vorteilhafterweise ist das Schiebeelement in bestimmten Stellungen, vorzugsweise in der vollständig ausgefahrenen Stellung, in der vollständig eingefahrenen Stellung und in einer zwischen diesen befindlichen mittleren Stellung, verrastbar, um definierte Lagen des Schiebeelements gegenüber dem Gehäuse der Chipkartenlesevorrichtung zu gewährleisten. Bevorzugt ist das Schiebeelement mittig in bezug auf die Breite des Gehäuses im Bereich des Einschubschlitzes angeordnet, so daß sich eine in konstruktiver Hinsicht günstige Ausgestaltung ergibt. In Hinsicht auf eine einfache Betätigung des Schiebeelements ist es fernerhin zweckmäßig, dieses mit Griffelementen zu versehen, die vorzugsweise durch Vertiefungen oder Vorsprünge an der Unter- und/oder Oberseite des Schiebeelements gebildet sind.

Um einen eine sichere Führung für eine einzuführende Chipkarte gewährleistenden Auflagebereich zu bilden, ist es außerdem vorteilhaft, wenn das Schiebeelement eine im wesentlichen ebene Auflagefläche aufweist. Als sehr zweckmäßig in diesem Zusammenhang hat es sich erwiesen, das Schiebeelement auf der dem Gehäuse abgewandten Seite mit einem aus der Ebene der Auflagefläche herausragenden Vorsprung zu versehen. Ein solcher Vorsprung bildet zum einen ein in haptischer Hinsicht gut zu greifendes Griffelement und bietet zum anderen den Vorteil eines Widerhalts für eine in die Chipkartenlesevorrichtung einzuführende Chipkarte. Weist der Vorsprung gemäß einer bevorzugten Weiterbildung der vorliegenden Erfindung zwei beidseitig angeordnete Zentriernocken auf, die in der vollständig eingefahren Stellung des Schiebeelements in entsprechend ausgebildete Aussparungen seitlich der Ausnehmung der unteren Abdeckplatte eingreifen, so läßt sich bei flacher Bauweise ein Anschlag des Schiebeelements an der unteren Abdeckplatte auf einfache Art und Weise realisieren.

In einer vorteilhaften Ausgestaltung der erfindungsgemäßen Chipkartenlesevorrichtung ist das Schiebeelement mit einer Ausnehmung versehen, in die eine Chipkarte, vorzugsweise in der Ausbildung als Plug-In-Karte, einlegbar ist. Dies bietet den Vorteil, daß sich zwei Karten, etwa eine Chipkarte nach ISO 78 16 und eine kleinere Plug-In-Karte, unabhängig voneinander in die Chipkartenlesevorrichtung einführen lassen. Eine solche Kombination zweier Chipkarten ist für zahlreiche Anwendungsfälle von großem Nutzen. So kann beispielsweise eine der Chipkarten eine persönliche Identitätskarte sein, wohingegen die andere Chipkarte eine auf eine Firma oder eine Organisation bezogene Smartcard oder ähnliches ist. Vorteilhafterweise ist das Schiebeelement dabei im Bereich der Ausnehmung mit einer durchgehenden Öffnung versehen, so daß sich ein Fenster ergibt, das die Entnahme einer in das Schiebeelement eingelegten Chipkarte erleichtert.

Gemäß einer weiteren vorteilhaften Ausgestaltung der Erfindung ist das Schiebeelement mit einem biometrischen Sensor versehen. Mit einem solchen Sensor lassen sich biometrische Daten, wie etwa der Fingerabdruck einer Person, erfassen und damit eine zuverlässige Identifikation und Authentifikation eines Benutzers der Chipkartenlesevorrichtung gewährleisten. Als besonders zweckmäßig hat sich zudem herausgestellt, in das Schiebeelement eine Sendeund/oder Empfangseinrichtung zu integrieren, die vorzugsweise in der vollständig ausgefahrenen Stellung des Schiebeelements aktivierbar ist. Auf diese Weise ist es möglich, die erfindungsgemäße Chipkartenlesevorrichtung etwa als ein Funkmodem oder ähnliches zu verwenden. Zweckmäßigerweise ist das Schiebeelement aus Kunststoff und/oder Metall gefertigt, so daß sich bei einfacher und in wirtschaftlicher Hinsicht kostengünstiger Fertigung eine hohe Formstabilität der Chipkartenlesevorrichtung erreichen läßt.

In Weiterbildung der erfindungsgemäßen Chipkartenlesevorrichtung wird überdies vorgeschlagen, die obere Abdeckplatte und die untere Abdeckplatte ausschließlich im Bereich der Steckanschlußleiste miteinander zu verbinden und den Einschubkanal über seine gesamte Länge in Einschubrichtung einer Chipkarte beidseitig durchgehend offen auszubilden, wobei die obere Abdeckplatte und die untere Abdeckplatte in einem geringen Maße relativ zueinander verformbar sind, und zwar derart, daß die Höhe des Einschubkanals gegen die Wirkung einer Rückstellkraft veränderbar ist, und wobei sich die Höhe des Einschubkanals bei entfernter Chipkarte mit zunehmendem Abstand von der Steckanschlußleiste in Richtung auf den Einschubschlitz verringert. Eine solche Ausgestaltung ist mit dem Vorteil verbunden, daß eine Chipkarte klemmend in dem Einschubkanal gehalten wird. Denn beim Einschieben der Chipkarte in den Einschubkanal weitet sich dieser auf, so daß die Chipkarte aufgrund einer mit dieser Aufweitung einhergehenden elastischen Rückverformung sicher im Einschubkanal arretiert wird.

Um ein einfaches und sicheres Einführen einer Chipkarte in den Einschubkanal zu gewährleisten, wird schließlich vorgeschlagen, die Stirnseite der oberen Abdeckplatte und/oder der unteren Abdeckplatte im Bereich des Einschubschlitzes mit einer Fase zu versehen.

Einzelheiten und weitere Vorteile des Gegenstandes der vorliegenden Erfindung ergeben sich aus der nachfolgenden Beschreibung bevorzugter Ausführungsbeispiele. In den zugehörigen Zeichnungen veranschaulichen im einzelnen:
- Fig. 1a: eine perspektivische Ansicht der erfindungsgemäßen Chipkartenlesevorrichtung nach einer ersten Ausführungsform mit einem Schiebeelement in einer ausgefahrenen Stellung;
- Fig. 1b: eine perspektivische Ansicht der Chipkartenlesevorrichtung nach Fig. 1a mit dem Schiebeelement in einer eingefahrenen Stellung;
- Fig. 2: eine perspektivische Ansicht der erfindungsgemäßen Chipkartenlesevorrichtung nach einer zweiten Ausführungsform mit einem Schiebeelement, das einen biometrischen Sensor aufweist, und
- Fig. 3: eine perspektivische Ansicht der erfindungsgemäßen Chipkartenlesevorrichtung nach einer dritten Ausführungsform mit einem Schiebeelement, in das eine Plug-In-Karte einlegbar ist.

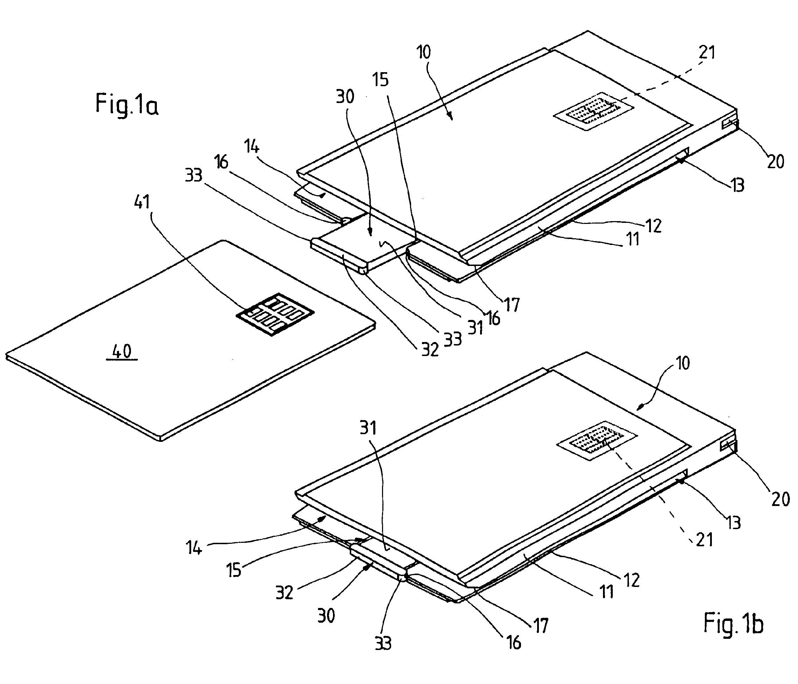

Die in den Fig. 1a und 1b gezeigte Chipkartenlesevorrichtung weist ein Gehäuse 10 auf, dessen Abmessungen denen einer nach dem PCMCIA-Standard genormten Steckkarte vom Typ II entsprechen. Das Gehäuse ist aus einer oberen Abdeckplatte 11 und einer unteren Abdeckplatte 12 zusammengesetzt. Zwischen der oberen Abdeckplatte 11 und der unteren Abdeckplatte 12 ist ein zu beiden Längsseiten des Gehäuses 10 hin offener Einschubkanal 13 ausgebildet, welcher der Aufnahme einer nach ISO 78 16 genormten Chipkarte 40 dient. Das Gehäuse ist ferner an einer Stirnseite mit einem Einschubschlitz 14 für die Chipkarte 40 versehen, der in den Einschubkanal 13 mündet. An der dem Einschubschlitz 14 gegen-überliegenden Stirnseite weist die Chipkartenlesevorrichtung eine Steckanschlußleiste 20 auf, die sich in einen PCMCIA-Steckplatz eines elektronischen Geräts, beispielsweise eines Notebooks oder eines digitalen Receivers, einführen läßt. Die Steckanschlußleiste 20 ist mit einer in den Zeichnungen nicht gezeigten Leiterplatte elektrisch verbunden, die sich annährend parallel zum Einschubkanal 13 im Gehäuse 10 erstreckt. Die Leiterplatte weist an ihrer dem Einschubkanal 13 zugewandten Seite ein Kontaktelement 21 auf, das bei in den Einschubkanal 13 eingeführter Chipkarte 40 ein auf der Chipkarte 40 angeordnetes Kontaktfeld 41 kontaktiert.

Wie in den Fig. 1a und 1b deutlich zu erkennen ist, sind die obere Abdeckplatte 11 und die untere Abdeckplatte 12 ausschließlich im Bereich der Steckanschlußleiste 20 miteinander verbunden. Dies hat zur Folge, daß die obere Abdeckplatte 11 und die untere Abdeckplatte 12 in einem geringen Maße relativ zueinander verformbar sind, so daß die Höhe des Einschubkanals 13 gegen die Wirkung einer durch diese Verformbarkeit hervorgerufenen Rückstellkraft veränderbar ist. Die obere Abdeckplatte 11 und die untere Abdeckplatte 12 sind zudem derart geneigt zueinander angeordnet, daß sich die Höhe des Einschubkanals 13 bei entfernter Chipkarte 40 mit zunehmendem Abstand von der Steckanschlußleiste 20 in Richtung auf den Einschubschlitz 14 verringert. Auf diese Weise wird eine in die Chipkartenlesevorrichtung eingeführte Chipkarte 40 klemmend in dem Einschubkanal 13 gehalten.

Weiterhin ist die Chipkartenlesevorrichtung im Bereich des Einschubschlitzes 14 mit einem in Richtung auf eine einzuführende Chipkarte 40 ausziehbaren Schiebeelement 30 versehen, das aus Kunststoff gefertigt ist. In der ausgefahrenen Stellung des Schiebeelements 30 wird die untere Abdeckplatte 12 durch das Schiebeelement 30 derart verlängert, daß sie in einem Bereich, der schmaler als ihre Breite ist, über die obere Abdeckplatte 11 ragt. Das im wesentlichen zungenförmige Schiebeelement 30 ist in bezug auf die Breite des Gehäuses 10 im Bereich des Einschubschlitzes 14 mittig angeordnet und wird in einer an der unteren Abdeckplatte 11 ausgebildeten Ausnehmung 15 geführt. Darüber hinaus weist das Schiebeelement 30 eine ebene Auflagefläche 31 auf, die eine Einführhilfe für eine in die Chipkartenlesevorrichtung einzuführende Chipkarte 40 darstellt und zu diesem Zweck bei Bedarf mit Rippen oder ähnlichem versehen sein kann. Um das durch das Schiebeelement 30 auf einfache Art und Weise ermöglichte anfängliche Einführen einer Chipkarte 40 in einer schrägen Lage zu unterstützen, ist Stirnseite der oberen Abdeckplatte 11 im Bereich des Einschubschlitzes 14 mit einer entsprechend orientierten Fase 17 versehen.

Die Auflagefläche 31 wird auf der dem Gehäuse 10 abgewandten Seite des Schiebeelements 30 durch einen Vorsprung 32 begrenzt, der aus der Ebene der Auflagefläche 31 herausragt. Der sowohl als Griff für das Schiebeelement 30 als auch als Widerhalt für eine einzuführende Chipkarte 40 dienende Vorsprung 32 weist zwei beidseitig angeordnete Zentriernocken 33 auf, die in der vollständig eingefahren Stellung des Schiebeelements 30 in entsprechend der Kontur der Zentriernocken 33 ausgebildete Aussparungen 16 eingreifen, die sich am stirnseitigen Rand der unteren Abdeckplatte 12 seitlich der Ausnehmung 15 befinden. Durch die Zentriernocken 33 wird das Schiebeelement 30 in seiner eingefahren Stellung in der Ausnehmung 15 zentriert. Zugleich bilden die Zentriernocken 33 einen Anschlag für das Schiebeelement 30, so daß sich dieses definiert in der unteren Abdeckplatte 12 versenken läßt, wie insbesondere in Fig. 1b zu erkennen ist.

Nicht dargestellt in den Zeichnungen ist ein in der unteren Abdeckplatte 12 angeordneter Auswurfmechanismus für das Schiebeelement 30. Durch den Auswurfmechanismus läßt sich das Schiebeelement 30 nach einer Druckbetätigung durch einen Benutzer der Chipkartenlesevorrichtung selbsttätig von der vollständig eingefahrenen Stellung nach Fig. 1b in die vollständig ausgefahrene Stellung nach Fig. 1a beziehungsweise umgekehrt bewegen. Gleichfalls nicht zu erkennen ist, daß das Schiebeelement 30 sowohl in der vollständig ausgefahrenen Stellung als auch in der vollständig eingefahrenen Stellung jeweils einrastet.

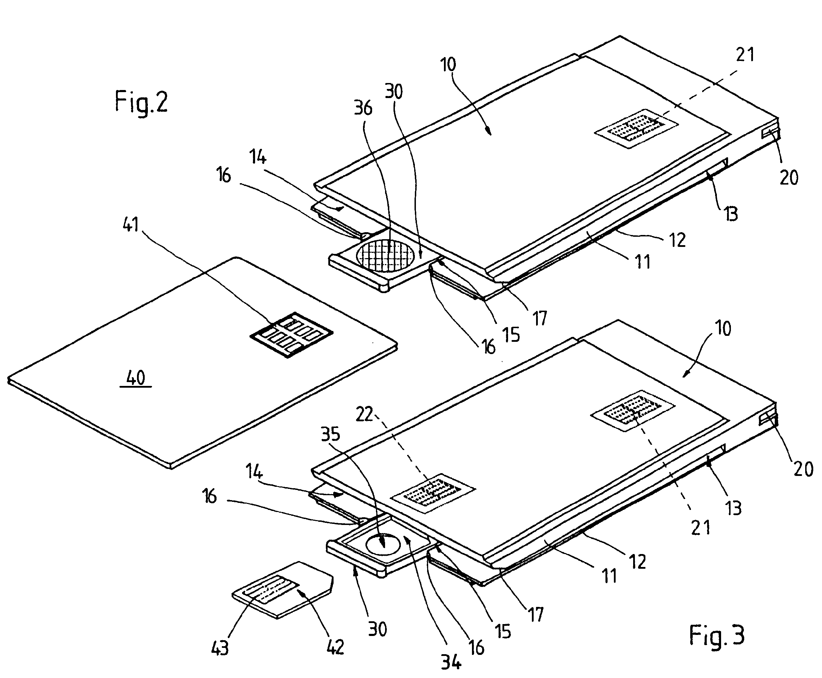

Die in Fig. 2 dargestellte Chipkartenlesevorrichtung unterscheidet sich von der in den Fig. 1a und 1b gezeigten Ausführungsform darin, daß das Schiebeelement 30 im Bereich der Auflagefläche 31 mit einem biometrischen Sensor 36 versehen ist, durch den sich der Fingerabdruck eines Benutzers der Chipkartenlesevorrichtung zu Zwecken einer Identifikation und/oder Authentifikation erfassen läßt.

Im Unterschied hierzu weist die Chipkartenlesevorrichtung nach Fig. 3 ein Schiebeelement 30 auf, das im Bereich der Auflagefläche 31 mit einer Ausnehmung 34 versehen ist. Die Ausnehmung 34 ist derart ausgebildet, daß sich eine als gebräuchliche Plug-In-Karte ausgebildete Chipkarte 42 paßgerecht einlegen läßt. Um die Chipkarte 42 bequem wieder entnehmen zu können, ist im Bereich der Ausnehmung 34 eine das Schiebeelement 30 durchsetzende Öffnung 35 ausgebildet. Die Öffnung 35 ermöglicht das Einführen etwa eines Fingers oder eines spitzen Gegenstands von unten in die Ausnehmung 34, so daß sich eine in dieser befindliche Chipkarte 42 einfach nach oben herausdrücken läßt. Die Chipkarte 42 ist mit einem Kontaktfeld 43 versehen, das in der eingefahrenen Stellung des Schiebeelements 30 ein mit der Leiterplatte verbundenes Kontaktelement 22 kontaktiert. Eine berührende Kontaktierung zwischen Kontaktfeld 43 und Kontaktelement 22 der in dem Schiebeelement 30 gegenüber dem Einschubkanal 13 vertieft angeordneten Chipkarte 42 ist aufgrund der zueinander geneigten Anordnung von oberer Abdeckplatte 11 und unterer Abdeckplatte 12 gewährleistet.

Der zuvor beschriebenen Ausführungsformen einer Chipkartenlesevorrichtung zeichnen sich durch ein verhältnismäßig einfaches Einführen einer Chipkarte 40 in den Einschubkanal 13 und eine vergleichsweise einfache Handhabung der Chipkartenlesevorrichtung bei der Entnahme aus dem Steckplatz eines elektronischen Geräts aus. Grund hierfür ist in erster Linie das Vorsehen des in Richtung auf eine einzuführende Chipkarte 40 ausziehbaren Schiebeelements 30, das in seiner ausgefahrenen Stellung sowohl eine Einführhilfe für eine einzuführende Chipkarte 40 als auch eine die Entnahme der Chipkartenlesevorrichtung erleichternde Verlängerung darstellt und in seiner eingefahrenen Stellung die Abmessungen der nach dem PCMCIA-Standard ausgebildeten Chipkartenlesevorrichtung nicht beeinträchtigt. Darüber hinaus ermöglicht das Schiebeelement 30 auf einfache Art und Weise, eine als Plug-In-Karte ausgebildete Chipkarte 42, die kleinere Abmessungen aufweist als die herkömmlichen Chipkarten nach ISO 78 16, in der Chipkartenlesevorrichtung auszulesen, oder bei Bedarf einen biometrischen Sensor vorzusehen. Nicht zuletzt eignet sich das Schiebeelement 30 aufgrund seiner exponierten Anordnung in der ausgefahren Stellung auch dazu, alternaiv oder zusätzlich eine Sende- und/oder Empfangseinrichtung unterzubringen, um modernen Anwendungsmöglichkeiten, beispielsweise im Zusammenhang mit dem Bluetooth-Standard, Rechnung zu tragen.

### Bezugszeichenliste

- 10: Gehäuse
- 11: obere Abdeckplatte
- 12: untere Abdeckplatte
- 13: Einschubkanal
- 14: Einschubschlitz
- 15: Ausnehmung
- 16: Aussparung
- 17: Fase

- 20: Steckanschlußleiste
- 21: Kontaktelement
- 22: Kontaktelement

- 30: Schiebeelement
- 31: Auflagefläche
- 32: Vorsprung
- 33: Zentriernocken
- 34: Ausnehmung
- 35: Öffnung
- 36: Sensor

- 40: Chipkarte
- 41: Kontaktfeld
- 42: Chipkarte
- 43: Kontaktfeld

## Patentansprüche

1. Chipkartenlesevorrichtung, insbesondere nach dem PCMCIA-Standard, mit einem Gehäuse (10), das eine obere Abdeckplatte (11) und eine untere Abdeckplatte (12) aufweist sowie an einer Stirnseite mit einem in einen Einschubkanal (13) für die Aufnahme wenigstens einer Chipkarte (40) mündenden Einschubschlitz (14) versehen ist, wobei an der dem Einschubschlitz (14) gegenüberliegenden Stirnseite des Gehäuses (10) eine Steckanschlußleiste (20) vorgesehen ist, die mit einer sich annährend parallel zum Einschubkanal (13) im Gehäuse (10) erstreckenden Leiterplatte elektrisch verbunden ist, und wobei die Leiterplatte mit wenigstens einem Kontaktelement (21, 22) zum Kontaktieren entsprechender Kontaktfelder (41, 43) einer in den Einschubkanal (13) eingeführten Chipkarte (40, 42) versehen ist,
**dadurch gekennzeichnet,**
**daß** die untere Abdeckplatte (12) im Bereich des Einschubschlitzes (14) mit einem ausziehbaren Schiebeelement (30) versehen ist, durch das die untere Abdeckplatte (12) in Richtung auf eine einzuführende Chipkarte (40, 42) wenigstens bereichsweise über die obere Abdeckplatte (11) hervorstehend verlängerbar ist.

2. Chipkartenlesevorrichtung nach Anspruch 1,
**dadurch gekennzeichnet, daß** das Schiebeelement (30) in einer Ausnehmung (15) der unteren Abdeckplatte (12) geführt ist.

3. Chipkartenlesevorrichtung nach Anspruch 1 oder 2,
**gekennzeichnet durch** einen Auswurfmechanismus, **durch** den das Schiebeelement (30) selbsttätig von einer ersten Stellung, vorzugsweise der vollständig eingefahrenen Stellung, in eine zweite Stellung, vorzugsweise die vollständig ausgefahrene Stellung, bewegbar ist.

4. Chipkartenlesevorrichtung nach einem der Ansprüche 1 bis 3,
**dadurch gekennzeichnet, daß** das Schiebeelement (30) in bestimmten Stellungen, vorzugsweise in der vollständig ausgefahrenen Stellung, in der vollständig eingefahrenen Stellung und in einer zwischen diesen befindlichen mittleren Stellung, verrastbar ist.

5. Chipkartenlesevorrichtung nach einem der Ansprüche 1 bis 4,
**dadurch gekennzeichnet, daß** das Schiebeelement (30) mittig in bezug auf die Breite des Gehäuses (10) im Bereich des Einschubschlitzes (14) angeordnet ist.

6. Chipkartenlesevorrichtung nach einem der Ansprüche 1 bis 5,
**dadurch gekennzeichnet, daß** das Schiebeelement (30) mit Griffelementen versehen ist, die vorzugsweise durch Vertiefungen oder Vorsprünge an der Unter- und/oder Oberseite des Schiebeelements (30) gebildet sind.

7. Chipkartenlesevorrichtung nach einem der Ansprüche 1 bis 6,
**dadurch gekennzeichnet, daß** das Schiebeelement (30) eine im wesentlichen ebene Auflagefläche (31) aufweist.

8. Chipkartenlesevorrichtung nach Anspruch 7,
**dadurch gekennzeichnet, daß** das Schiebeelement (30) auf der dem Gehäuse (10) abgewandten Seite mit einem aus der Ebene der Auflagefläche (31) herausragenden Vorsprung (32) versehen ist.

9. Chipkartenlesevorrichtung nach Anspruch 8,
**dadurch gekennzeichnet, daß** der Vorsprung (32) zwei beidseitig angeordnete Zentriernocken (33) aufweist, die in der vollständig eingefahren Stellung des Schiebeelements (30) in entsprechend ausgebildete Aussparungen (16) seitlich der Ausnehmung (15) der unteren Abdeckplatte (12) eingreifen.

10. Chipkartenlesevorrichtung nach einem der Ansprüche 1 bis 9,
**dadurch gekennzeichnet, daß** das Schiebeelement (30) mit einer Ausnehmung (33) versehen ist, in die eine Chipkarte (42), vorzugsweise in der Ausbildung als Plug-In-Karte, einlegbar ist.

11. Chipkartenlesevorrichtung nach Anspruch 10,
**dadurch gekennzeichnet, daß** das Schiebeelement (30) im Bereich der Ausnehmung (34) mit einer durchgehenden Öffnung (35) versehen ist.

12. Chipkartenlesevorrichtung nach einem der Ansprüche 1 bis 11,
**dadurch gekennzeichnet, daß** das Schiebeelement (30) mit einem biometrischen Sensor (36) versehen ist.

13. Chipkartenlesevorrichtung nach einem der Ansprüche 1 bis 12,
**dadurch gekennzeichnet, daß** in das Schiebeelement (30) eine Sendeund/oder Empfangseinrichtung integriert ist, die vorzugsweise in der vollständig ausgefahrenen Stellung des Schiebeelements (30) aktivierbar ist.

14. Chipkartenlesevorrichtung nach einem der Ansprüche 1 bis 13,
**dadurch gekennzeichnet, daß** das Schiebeelement (30) aus Kunststoff und/oder Metall gefertigt ist.

15. Chipkartenlesevorrichtung nach einem der Ansprüche 1 bis 14,
**dadurch gekennzeichnet, daß** die obere Abdeckplatte (11) und die untere Abdeckplatte (12) ausschließlich im Bereich der Steckanschlußleiste (20) miteinander verbunden sind und der Einschubkanal (13) über seine gesamte Länge in Einschubrichtung einer Chipkarte (40) beidseitig durchgehend offen ist, wobei die obere Abdeckplatte (11) und die untere Abdeckplatte (12) in einem geringen Maße relativ zueinander derart verformbar sind, daß die Höhe des Einschubkanals (13) gegen die Wirkung einer Rückstellkraft veränderbar ist, und wobei sich die Höhe des Einschubkanals (13) bei entfernter Chipkarte (40) mit zunehmendem Abstand von der Steckanschlußleiste (20) in Richtung auf den Einschubschlitz (14) verringert.

16. Chipkartenlesevorrichtung nach einem der Ansprüche 1 bis 15,
**dadurch gekennzeichnet, daß** die Stirnseite der oberen Abdeckplatte (11) und/oder der unteren Abdeckplatte (12) im Bereich des Einschubschlitzes (14) mit einer Fase (17) versehen ist.
